Europäisches Patentamt

European Patent Office

Office européen des brevets

(19)

(11) EP 0 569 690 B1

(12) EUROPÄISCHE PATENTSCHRIFT

(45) Veröffentlichungstag und Bekanntmachung des Hinweises auf die Patenterteilung:
04.12.1996  Patentblatt 1996/49

(51) Int Cl.⁶: C07F 5/06

(21) Anmeldenummer: 93104717.9

(22) Anmeldetag: 23.03.1993

(54) **Verfahren zur Herstellung von Trimethylaluminium durch Reduktion von Methylaluminiumchloriden mit Natrium unter Verwendung hoher Scherkräfte**

Process for the preparation of trimethyl aluminium by the reduction of methyl aluminium chloride with sodium using high shearing force

Procédé pour la préparation de triméthyl aluminium par réduction de chlorure de méthylaluminium avec sodium utilisant cisaillement élevé

(84) Benannte Vertragsstaaten:
AT BE DE ES FR GB IT NL SE

(30) Priorität: 13.05.1992  DE 4215745

(43) Veröffentlichungstag der Anmeldung:
18.11.1993  Patentblatt 1993/46

(73) Patentinhaber: Witco GmbH
D-59180 Bergkamen (DE)

(72) Erfinder:
• Becker, Ralf-Jürgen, Dr. Dipl.-Ing.
W-4700 Hamm 4 (DE)
• Gürtzgen, Stefan, Dr. Dipl.-Chem.
W-5600 Wuppertal 21 (DE)
• Schneider, Jürgen, Dipl.-Ing.
W-4570 Unna (DE)
• Die andere Erfinder haben auf ihre Nennung verzichtet

(56) Entgegenhaltungen:
EP-A- 0 257 695          FR-A- 2 143 859

• METHODEN DER ORGANISCHEN CHEMIE (HOUBEN-WEYL) 1970, Band XIII/4, Georg Thieme Verlag, Stuttgart/New York, G. BAHR et al., Seiten 51-53
• CHEMICAL ABSTRACTS, Band 73, 1970, Columbus, Ohio, US; Zusammenfassung-Nr. 131070c, S. PASYNKIEWICZ. et al., Seite 369

**Beschreibung**

Trimethylaluminium (TMA) gewinnt in zunehmendem Maße an Interesse aufgrund seiner vielseitigen Anwendungsmöglichkeiten im Bereich der Halbleiterelektronik, Galvanoaluminierung sowie Katalyse zur Polyolefinherstellung.

In der Literatur sind zahlreiche Methoden zur Herstellung von TMA beschrieben. Als Beispiele aufgeführt seien US-A-2 744 127; US-A-2 839 556; Adv. Inorg. Chem. Radiochem. 7, 269 (1967); K. Ziegler, Oraanomet. Chem., ACS Monograph No. 147, 197 (1960).

In industriellem Maßstab erfolgt die Herstellung von TMA üblicherweise durch Reduktion von Methylaluminiumchloriden mit geschmolzenem metallischem Natrium, dispergiert in einem inerten Kohlenwasserstoff, wie Tetralin, n-Decan, n-Heptan etc. gemäß Reaktionsgleichung (1)

$$3\ Me_{3-x}AlCl_x + 3x\ Na \rightarrow (3-x)\ Me_3Al + x\ Al + 3x\ NaCl.$$

Die einzusetzenden Methylaluminiumchloride umfassen Dimethylaluminiumchlorid (DMAC) sowie Methylaluminiumsesqui-chlorid als deren Mischung.

Aufgrund von Passivierungseffekten infolge Abscheidung von Reaktionsnebenprodukten (NaCl,Al) auf der Oberfläche des Natriums sind die Ausbeuten jedoch mäßig (47 - 85 %) und das gewonnene TMA enthält darüber hinaus Restmengen des Ausgangsproduktes DMAC sowie des häufig in großen Mengen als Suspendierhilfsmittel eingesetzten inerten Kohlenwasserstoffs.

Die Verwendung von Natrium im Überschuß zur Vervollständigung des Umsatzes des Methylaluminiumchlorids fördert die Bildung komplexer Alkyle. wodurch ebenfalls die Ausbeute gemindert wird:

$$4\ Me_3Al + 3\ Na \rightarrow 3\ NaAlMe_4 + Al \qquad (2)$$

Darüber hinaus werden Reaktorverkrustungen sowie Entsorgungs- und Sicherheitsprobleme aufgrund von inkludiertem Natrium beobachtet.

US-A-5 015 750 beschreibt ein Verfahren, bei dem TMA aus Methylaluminiumchloriden und Natrium in Ausbeuten von ca. 90 % ohne Einsatz von Natrium im Überschuss erhalten wird. Das Produkt enthält lediglich ca. 0.03 % Chlor und die Synthese benötigt deutlich weniger Suspendierhilfsmittel als vergleichbare Prozesse. Solche positiven Ergebnisse werden jedoch nur in Gegenwart von 1 - 10 % Katalysatoren wie Alkali- bzw. Erdalkalifluoriden erzielt, die wiederum bei der Entsorgung zu berücksichtigen sind.

Außerdem wird bei der vorgeschlagenen Verfahrensweise DMAC und Natrium parallel dosiert. Hierbei wird Natrium durch den Gasraum auf die Flüssigkeitsoberfläche dosiert. Wird Natrium, z. B. durch einen Rührer, an der Reaktorwandung oberhalb der Flüssigkeitsoberfläche verteilt, so reagiert das Natrium sofort mit dem in der Gasphase vorhandenen DMAC. Bei diesem sich immer wiederholenden Prozeß bauen sich große Ablagerungen auf.

Überraschenderweise wurde nun gefunden, daß ein praktisch chlorfreies TMA in hohen Ausbeuten (ca. 90 %) unter Verwendung relativ geringer Suspendiermittelmengen auch ohne den Einsatz von Katalysatoren erhalten wird, wenn man die Reaktanden dem Scherfeld einer Rotor-Stator-Maschine aussetzt.

Gegenstand der Erfindung ist demnach ein Verfahren zur Herstellung von Trimethylaluminium aus Methylaluminiumchloriden, bevorzugt DMAC, und Natrium in einem Suspendierhilfsmittel, welches dadurch gekennzeichnet ist, daß man die Reaktanden dem Scherfeld einer Rotor-Stator-Maschine aussetzt.

Bei Durchgang durch die Maschine werden die Reaktionskomponenten alternierend in den Rotor-Werkzeugen zentrifugal beschleunigt und in hohe Umfangsgeschwindigkeit versetzt, um im nächsten feststehenden Stator-Werkzeug wieder abgebremst und in radiale Richtung gelenkt zu werden. Dabei werden hohe Scherkräfte aufgebaut. Dieser Vorgang erfolgt aufgrund der Drehzahl und der Werkzeugkonfiguration so häufig, daß eine besonders gute Produktverwirbelung erfolgt und eine Verklumpung von Aluminium und NaCl mit Natrium vermieden wird.

Als geeignete Rotor-Stator-Maschinen können beispielsweise folgende Geräte eingesetzt werden:

- SUPRATON$^R$ S300 mit Kegelwerkzeug der Fa. DORR-OLIVER Deutschland GmbH (beschrieben in DE-A-23 63 888)
- ULTRA-TURRAX$^R$ der Fa. IKA$^R$, Staufen (beschrieben in US-PS 2 619 330, GB-PS 734 541)
- MISCHSIRENE der Fa. Fluid. Essen
- DISPAX-REACTOR$^R$ der Fa. IKA$^R$, Staufen (beschrieben in US-PS 2 619 330. GB-PS 734 541)

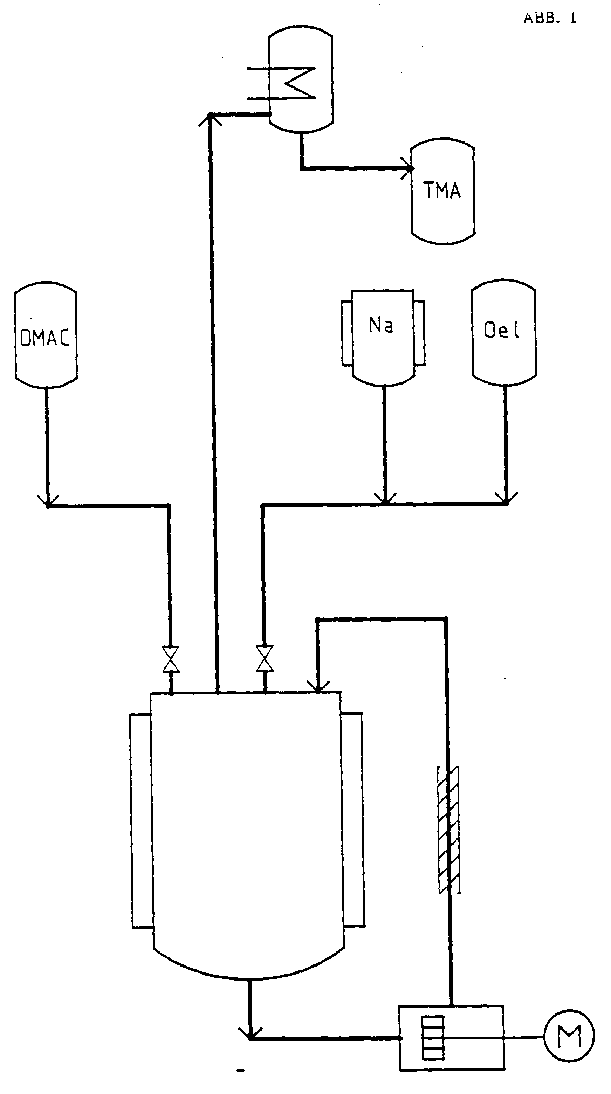

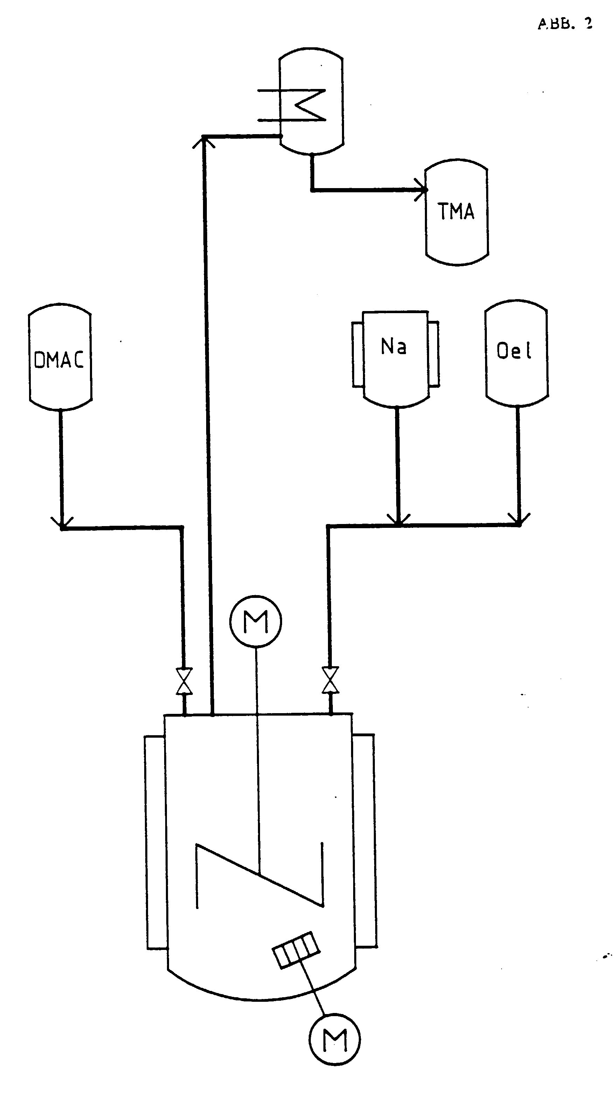

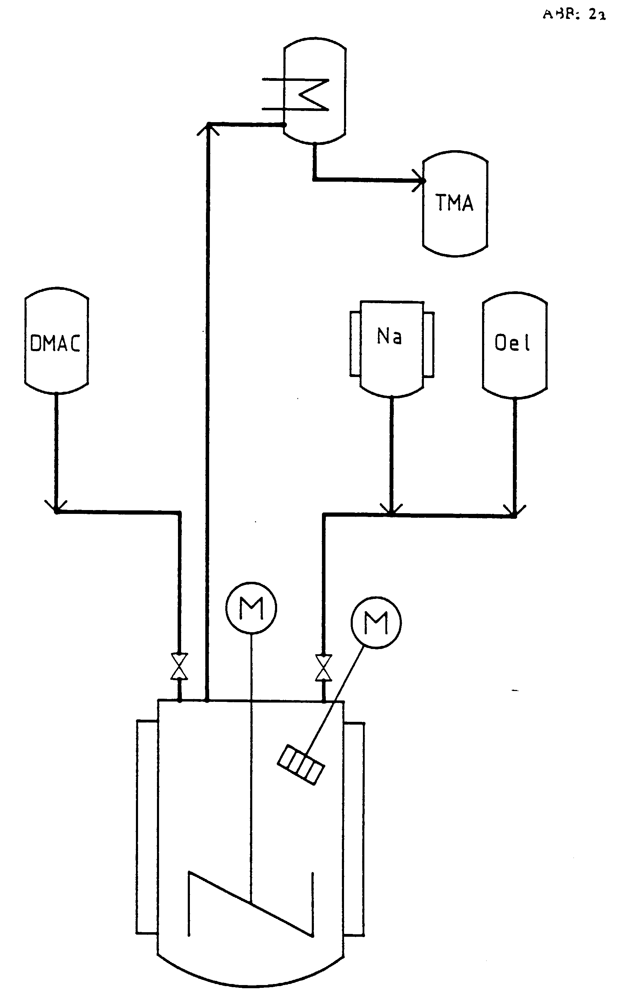

Die Rotor-Stator-Maschinen können hierbei in einer sogenannten Außenschlaufe (Abb. 1) oder direkt im Behälter integriert werden (Abb. 2 und 2a).

Bevorzugt ist die Rotor-Stator-Maschine außerhalb des Reaktorgefäßes angeordnet.

Die Reaktion wird vorzugsweise zwischen 130 und 150 °C durchgeführt. Niedrigere Temperaturen von 100 bis 130 °C sind für eine schnelle Umsetzung ungeeignet, prinzipiell aber durchführbar. Bei einer Temperatur oberhalb 150 °C wird ein höherer Druck auf der gesamten Anlage benötigt, da die Reaktionskomponenten DMAC/TMA bei 126/127 °C sieden. Über 190 °C hinaus zersetzt sich das TMA.

Für die Durchmischung wird ein weiterer Rührer verwendet. Dieser sorgt einerseits für eine Vermischung von DMAC mit der vorliegenden Suspension, andererseits wird durch das Rührorgan die Wärmeabfuhr beschleunigt. Offenbar wird durch das erfindungsgemäße Verfahren die Oberfläche des eingesetzten Natriums so effektiv aktiviert, daß die gemäß Stand der Technik bisher in Kauf zu nehmenden Nachteile vermieden werden und demnach eine Reihe von Vorteilen erreicht wird:

1. Es werden hohe Ausbeuten um 90 %, bezogen auf eingesetztes DMAC, erzielt.

2. Das Produkt ist nahezu chlorfrei (<0,01 %) und ist damit besonders für den Einsatz als Katalysatorkomponente geeignet.

3. Die Suspendiermittelmengen können relativ gering gehalten werden.

4. Verklumpungen, inkludiertes Natrium und damit verbundene Gefahren bei der Handhabung und Entsorgung sowie unkontrollierte Reaktionsprozesse werden vermieden.

Nach der Umsetzung kann das TMA destillativ vom Schlamm getrennt werden. Die als Rückstände verbleibenden Schlämme lassen sich aufgrund des niedrigen Natriumgehaltes sicher handhaben und aufarbeiten, wobei die bei der Aufarbeitung anfallenden Kohlenwasserstoffe in den Prozeß zurückfließen.

5. Der Einsatz von Katalysatoren, wie die in US-A-5 015 750 vorgeschlagenen Alkali- oder Erdalkalifluoride, werden vermieden.

Die Aufarbeitung der verbleibenden Rückstände zur Rückgewinnung der Kohlenwasserstoffe erfolgt wässrig und sauer, um das Aluminium und Natriumchlorid zu lösen. Beim Einsatz von Alkali- oder Erdalkalifluoriden wird bei der sauren Zersetzung unter anderem HF in höherer Konzentration erzeugt. Hierbei entstehen erhebliche Korrosionsprobleme.

Beispiele

Beispiel 1

In 250 kg eines hochsiedenen Prozeßöls (ENERPAR$^R$ M006 der Fa. BP) wurden 50 kg Natrium bei 130 °C geschmolzen. Das Gemisch wurde mittels SUPRATON$^R$ (vergl. Abb. 1) dispergiert. Zu dieser Suspension wurden 199 kg DMAC (Cl = 37,5 %) dosiert und anschließend das entstandene TMA aus der Suspension abdestilliert (TMA Menge = 95,4 kg, Al-Gehalt = 37,2 %, Cl <0,01 %, Ausbeute, bezogen auf TMA = 92 %).

Vergleichsbeispiel

In 250,0 kg des Prozeßöls wurden 50,0 kg Natrium geschmolzen. Hierzu wurden 186,0 kg DMAC ohne SUPRATON$^R$ in den Reaktor dosiert. Trotz eines höheren Natriumüberschusses war die Umsetzung nicht vollständig (Cl = 6,7 %).

Beispiel 2

Zu 225 kg des Prozeßöls wurden 45,4 kg flüssiges Natrium dosiert. Im SUPRATON$^R$ wurde aus dieser groben eine feine Suspension erzeugt und anschließend 185 kg DMAC zudosiert. Es entstanden 82,2 kg TMA (Cl <0,01 %, Ausbeute, bezogen auf TMA = ca. 88 %).

Beispiel 3

Es wurde analog Beispiel 2 verfahren mit der Abänderung, daß als Dispergator die Mischsirene der Fa. Fluid, Essen verwendet wurde.
Es entstanden 84,1 kg TMA (Cl <0,01 %, Ausbeute bezogen auf TMA = 90 %).

Beispiel 4

In 401 g Toluol wurden 51,5 g Natrium mittels ULTRA-TURRAX$^R$ (Abb. 2) dispergiert. Bei laufenden ULTRA-TURRAX$^R$ wurden 210 g DMAC (96,1 %) dosiert. Bei der Destillation wurde eine Lösung aus Toluol und TMA abdestilliert. Bezogen auf TMA betrug die Ausbeute 92,5 %, Cl-Gehalt <0,01 %.

**Patentansprüche**

1. Verfahren zur Herstellung von Trimethylaluminium aus Methylaluminiumchloriden und Natrium in einem Suspendierhilfsmittel, dadurch gekennzeichnet, daß man die Reaktanden dem Scherfeld einer Rotor-Stator-Maschine aussetzt.

2. Verfahren gemäß Anspruch 1, dadurch gekennzeichnet, daß die Rotor-Stator-Maschine außerhalb des Reaktionsgefäßes angeordnet ist.

3. Verfahren gemäß Anspruch 1 oder 2, dadurch gekennzeichnet, daß man die Umsetzung bei einer Temperatur von 130 bis 150 °C durchführt.

4. Verfahren gemäß einem der Ansprüche 1 - 3, dadurch gekennzeichnet, daß im Reaktor ein Rührer zur Durchmischung der Suspension angeordnet ist.

5. Verfahren gemäß einem der Ansprüche 1 - 4, dadurch gekennzeichnet, daß Dimethylaluminiumchlorid gegebenenfalls in Mischung mit Methylaluminiumsesquichlorid eingesetzt wird.

**Claims**

1. Process for the preparation of trimethylaluminium from methylaluminium chlorides and sodium in a suspension auxiliary, characterised in that the reactants are subjected to the shearing action of a rotor-stator machine.

2. Process according to claim 1, characterised in that the rotor-stator machine is arranged outside the reaction vessel.

3. Process according to claim 1 or 2, characterised in that the reaction is carried out at a temperature of from 130 to 150°C.

4. Process according to any one of claims 1 to 3, characterised in that a stirrer is arranged in the reactor for thorough mixing of the suspension.

5. Process according to any one of claims 1 to 4, characterised in that dimethylaluminium chloride optionally in admixture with methylaluminium sesquichloride is used.

**Revendications**

1. Procédé pour fabriquer du triméthylaluminium à partir de chlorures de méthylaluminium et de sodium dans un auxiliaire de mise en suspension, caractérisé en ce que les substances participant à la réaction sont exposées au champ de cisaillement d'une machine à rotor-stator.

2. Procédé selon la revendication 1, caractérisé en ce que la machine à rotor-stator est disposée à l'extérieur du réacteur.

3. Procédé selon la revendication 1 ou 2, caractérisé en ce qu'on met en oeuvre la réaction à une température de 130 à 150°C.

4. Procédé selon l'une des revendications 1 à 3, caractérisé en ce qu'un agitateur est disposé dans le réacteur pour permettre le mélange de la suspension.

5. Procédé selon l'une des revendications 1 à 4, caractérisé en ce que le chlorure de diméthylaluminium est utilisé éventuellement en mélange avec du sesquichlorure de méthylaluminium.

ABB. 1

TMA

OMAC

Na

Oel

M

ABB. 2

ABB: 2a